# EUROPEAN PATENT SPECIFICATION

(11) **EP 1 957 363 B1**
(45) Date of publication and mention of the grant of the patent: **18.02.2015**
(21) Application number: 06851739.0
(22) Date of filing: 31.10.2006
(51) Int. Cl.: B64C 27/52, B64C 27/00, B64C 27/615, B64C 27/72

(54) **ROTORCRAFT CONTROL SYSTEM AND METHOD OF USING**
DREHFLÜGLER-STEUERUNGSSYSTEM UND VERWENDUNGSVERFAHREN DAFÜR
SYSTEME DE COMMANDE DE GIRAVION ET PROCEDE D'UTILISATION CORRESPONDANT

(30) Priority: 09.12.2005 US 299158
(43) Date of publication of application: 20.08.2008
(73) Proprietor: Sikorsky Aircraft Corporation, Stratford, CT 06616-9129 (US)
(72) Inventor: CHAUDHRY, Zaffir, South Glastonbury CT 06073 (US); WAKE, Brian E., South Glastonbury CT 06073 (US); MING, Cao, Rochester Hills, MI 48306 (US)
(74) Representative: Klunker, Hans-Friedrich
(86) International application number: PCT/US2006/042627
(87) International publication number: WO 2008/048278

(56) References cited:
- US-A- 2 716 460
- US-A- 4 630 441
- US-A- 4 946 354
- US-A- 5 387 083
- US-A- 5 639 215
- US-A- 5 711 651
- US-A1- 2005 123 400
- US-B1- 6 478 541
- US-B1- 6 497 385
- US-B2- 6 530 542

## Description

### BACKGROUND OF THE INVENTION

### 1. Field of the Invention

The present disclosure relates to rotorcraft control systems. More specifically, the present disclosure relates to rotorcraft control systems in which trailing-edge flaps are used for both primary flight control (PFC) and higher harmonic control (HHC).

### 2. Description of Related Art

For over a half-century, rotorcraft, such as, but not limited to, helicopters have included control systems using a swashplate for effectuating primary flight control of the rotorcraft. Although simple to implement, the swashplate control system suffers from several shortcomings, including large drag forces which significantly reduce energy efficiency, lack of higher harmonic control capability, and insufficient system redundancy.

Trailing-edge flaps have been used in the prior art for purposes of higher harmonic control, that is, for reduction of noise and vibration in a rotorcraft. These flaps, often termed "active flaps" have typically been driven by electromechanical actuators or solenoids.

Thus, prior art rotorcraft have required two separate control systems: a swashplate system for primary flight control, and a noise and vibration reduction system for higher harmonic control. These two systems have increased the cost and complexity of prior art rotorcraft control systems.

US 6,530,542 B2 discloses a rotary wing aircraft with electric pitch control. Each blade of the wind comprises a plurality of flaps which are able to control the pitch of said blade and are aligned along the span of the latter, said flaps being individually controlled in orientation from a flight control device.

Accordingly, there is a need for rotorcraft control systems that overcome one or more of the aforementioned and other deficiencies of the prior art control systems.

### BRIEF SUMMARY OF THE INVENTION

It is an object of the present invention to provide a swashplateless rotorcraft control system.

It is another object of the present invention to provide a rotorcraft control system that provides both primary flight control and higher harmonic control.

It is yet another object of the present invention to provide a rotorcraft control system that optimizes the use of actuators by separating the function of primary flight control and the function of higher harmonic control between a primary flap and a secondary flap, respectively.

These and other objects and advantages are achieved by the present invention that in one preferred embodiment provides a rotorcraft control system comprising at least one rotor blade having a trailing edge, a chord length, a span, and at least one primary flap, at least one primary actuator, at least one secondary flap, and at least one secondary actuator provided therein. The primary flap being operatively connected, preferably pivotally connected, to the trailing edge for movement among a neutral position, a positive position, and a negative position; the primary flap being principally used for primary flight control. The primary actuator is preferably operatively connected to the primary flap to move the primary flap among the neutral, positive, and negative positions. The secondary flap being operatively connected, preferably pivotally connected, to the trailing edge for movement among the neutral, positive, and negative positions; the secondary flap being principally used for higher harmonic control. The secondary actuator is preferably operatively connected to the secondary flap to move the secondary flap among the neutral, positive, and negative positions. The stroke requirements between the at least one first actuator and the at least one second actuator vary by an order of magnitude.

In an alternate preferred embodiment, a method of effectuating primary flight control and higher harmonic control of a rotorcraft having a rotor assembly including at least one rotor blade with a trailing edge is also provided. The method includes rotating the rotor blade through an azimuth, moving a primary flap among a neutral position, a positive position, and a negative position to carry out primary flight control of the rotorcraft, and moving a secondary flap among the neutral position, the positive position, and the negative position to carry out higher harmonic control of the rotorcraft. Both the primary flap and the secondary flap are operatively connected preferably pivotally connected, to the trailing edge of the rotor blade. The first and second stroke capabilities vary by an order of magnitude.

In another alternate preferred embodiment, a rotorcraft including a body and a rotor assembly having at least one rotor blade is also provided. The rotor assembly is connected to the body and has at least one primary actuator in the at least one rotor blade, interfacing with and controlling at least one primary flap. The at least one primary actuator and the at least one primary flap are used principally for primary flight control. The rotor assembly also has at least one secondary actuator in the at least one rotor blade, interfacing with and controlling at least one secondary flap. The at least one secondary actuator and the at least one secondary flap are used principally for higher harmonic control.

Further embodiments of the invention are set out in the following numbered paragraphs:
1. A rotorcraft control system comprising:
   at least one rotor blade including a trailing edge, a chord length, and a span;
   at least one primary flap having a length and a width, the at least one primary flap being operatively connected to the trailing edge for movement among a neutral position, a positive position, and a negative position, the at least one primary flap being used principally for primary flight control;
   at least one primary actuator operatively connected to the at least one primary flap to move the at least one primary flap among the neutral, positive, and negative positions;
   at least one secondary flap having a length and a width, the at least one secondary flap being operatively connected to the trailing edge for movement among the neutral, positive, and negative positions, the at least one secondary flap being used principally for higher harmonic control; and at least one secondary actuator operatively connected to the at least one secondary flap to move the at least one secondary flap among the neutral, positive, and negative positions.
2. The system of paragraph 1, wherein the at least one secondary flap is also configured for use in primary flight control.
3. The system of paragraph 2, wherein the at least one secondary actuator moves the at least one secondary flap in a non-harmonic manner.
4. The system of paragraph 1, wherein the rotor blade comprises at least two primary flaps and at least one secondary flap.
5. The system of paragraph 4, wherein the width of the primary flaps when added together is approximately 15% to approximately 35% of the span.
6. The system of paragraph 4, wherein the width of the at least two primary flaps and the secondary flap, when added together, is 20% to 50% of the span.
7. The system of paragraph 4, wherein the length of the at least two primary flaps and secondary flap is approximately 15% to approximately 25% of the chord length.
8. The system of paragraph 1, wherein the rotor blade comprises at least three primary flaps and at least two secondary flaps.
9. The system of paragraph 1, wherein the width of the secondary flap is approximately 5% to approximately 15% of the span.
10. The system of paragraph 1, wherein the at least one primary flap and the at least one primary actuator are located in-board of the at least one secondary flap and the at least one secondary actuator.
11. The system of paragraph 1, wherein the at least one primary flap and the at least one secondary flap are pivotally connected to the trailing edge for movement among the neutral, positive, and negative positions.
12. The system of paragraph 1, wherein the at least one primary actuator is a BLDC motor based actuator.
13. The system of paragraph 12, wherein the at least one secondary actuator is a BLDC motor based actuator.
14. The system of paragraph 1, wherein the at least one primary actuator and the at least one secondary actuator are sized and configured to fit within the interior profile of the rotor blade.
15. A method for effectuating primary flight control and higher harmonic control of a rotorcraft having a rotor assembly including at least one rotor blade, the method comprising:
   rotating the at least one rotor blade through an azimuth;
   moving at least one primary flap among a neutral position, a positive position, and a negative position to carry out the primary flight control, the at least one primary flap being operatively connected to a trailing edge of the at least one rotor blade:
   moving at least one secondary flap among the neutral position, the positive position, and the negative position to carry out the higher harmonic control, the at least one secondary flap being operatively connected to the trailing edge of the at least one rotor blade.
16. The method of paragraph 15, further comprising moving the at least one secondary flap among the neutral position, the positive position, and the negative position to carry out the primary flight control.
17. The method of paragraph 16, further comprising moving the at least one secondary flap among the neutral position, the positive position, and the negative position in a harmonic manner.
18. The method of paragraph 16, further comprising moving the at least one secondary flap among the neutral position, the positive position, and the negative position in a non-harmonic manner.
19. The method of paragraph 15, controlling the movement of the at least one primary flap by at least one primary actuator.
20. The method of paragraph 15, controlling the movement of the at least one secondary flap by at least one secondary actuator.
21. A rotorcraft comprising:
   a body;
   a rotor assembly having at least one rotor blade, the rotor assembly being connected to the body;
   at least one primary actuator in the at least one rotor blade, interfacing with and controlling at least one primary flap, the at least one primary actuator and the at least one primary flap being used principally for primary flight control;
   at least one secondary actuator in the at least one rotor blade,
   interfacing with and controlling at least one secondary flap, the at least one secondary actuator and the at least one secondary flap being used principally for higher harmonic control.
22. The rotorcraft of paragraph 16, wherein the rotor assembly does not have the drag forces associated with a swashplate.
23. The rotorcraft of paragraph 16, wherein the rotorcraft does not have the weight associated with a swashplate.

The above-described and other features and advantages of the present disclosure will be appreciated and understood by those skilled in the art from the following detailed description, drawings, and appended claims.

### BRIEF DESCRIPTION OF THE SEVERAL VIEWS OF THE DRAWINGS

FIG. 1 is a perspective view of an exemplary embodiment of a rotorcraft control system according to the present disclosure;
FIG. 2 is a top view of the rotor blade of FIG. 1;
FIG. 3A is a cross-sectional view of the rotor blade of FIG. 2 taken along lines 3-3 showing the flaps in a neutral position;
FIG. 3B is a cross-sectional view of the rotor blade of FIG. 2 showing the flaps in a positive position; and
FIG. 3C is a cross-sectional view of the rotor blade of FIG. 2 showing the flaps in a negative position.

### DETAILED DESCRIPTION OF THE INVENTION

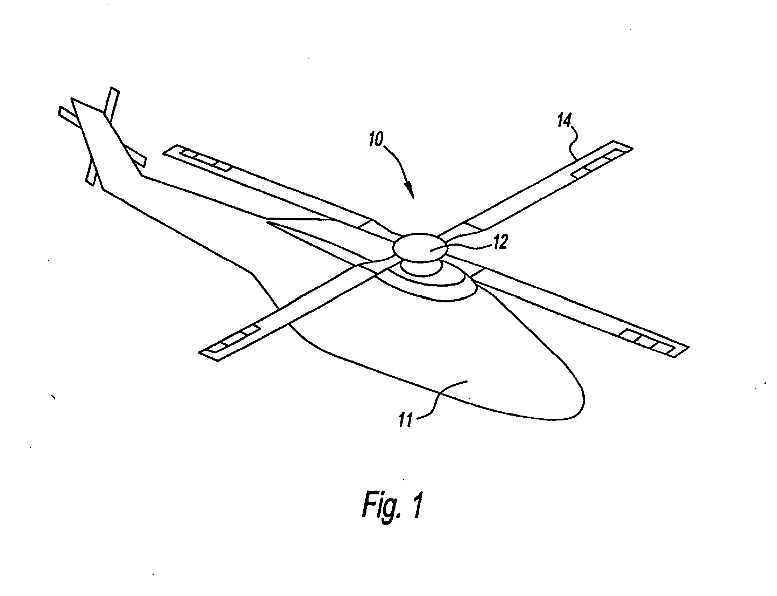

FIG. 1 schematically illustrates an exemplary embodiment of a rotorcraft control system 10 connected to a rotorcraft body 11 (i.e., an airframe) according to the present disclosure. The control system 10 includes a rotor assembly 12 and at least two or more rotor blades 14 (four shown). Advantageously, the control system 10 is configured such that the rotor assembly 12 does not include a swashplate to control the pitch of the rotor blades as generally known in the prior art.

For purposes of clarity, the control system 10 is illustrated in use with an exemplary helicopter (shown in phantom). Although a helicopter with a single main rotor is illustrated in FIG. 1, other rotorcraft will also benefit from the present invention such as a rotorcraft with counter-rotating rotors or tandem rotors. Additionally, it is to be understood that the control system of the present invention may be incorporated into other aircraft as well, such as, for example, compound rotary-wing aircraft having a dual counter-rotating, coaxial rotor system; turbo-prop aircraft; tilt-rotor aircraft; tilt wing aircraft; and the like.

The control system 10 is a trailing-edge flap system capable of both primary flight control (PFC) and higher harmonic control (HHC). PFC relates to the lift of the rotorcraft that results in the vertical and translational movement of the rotorcraft through the magnitude and tilt of the rotor thrust. HHC relates to changing the individual orientation (i.e. pitch) of the blades at higher harmonics as it rotates to improve rotor performance, such as reducing the overall noise and vibration of the rotorcraft.

Traditionally, prior art rotorcraft have used a swashplate and its associated control linkages for PFC. Since the swashplate is generally exposed to the air, a large amount of hub drag is created. By incorporating the control system in accordance with the present invention, the swashplate is eliminated, which in turn significantly reduces hub drag, thus increasing the rotorcraft's fuel efficiency.

Moreover, in traditional rotorcraft, the swashplate and associated components, such as hydraulic actuators and control linkages, may constitute about 5% of the weight of the rotorcraft. Since the control system 10 of the present invention eliminates the need for these elements, the control system 10 also reduces the weight of the rotorcraft. The decrease in weight due to the control system 10 allows the rotorcraft to, for example, carry more fuel, which in turn can increase the range of the rotorcraft by approximately 20% or increase the payload capabilities of the rotorcraft while maintaining the same range capabilities.

In addition, since the control system 10 includes both PFC and HHC, it eliminates the need for the vibration reduction equipment of prior art control systems. As a result, the weight savings available through the use of the control system 10 can increase the range of the rotorcraft by approximately an additional 10% or increase the payload capabilities of the rotorcraft while maintaining the same range capabilities.

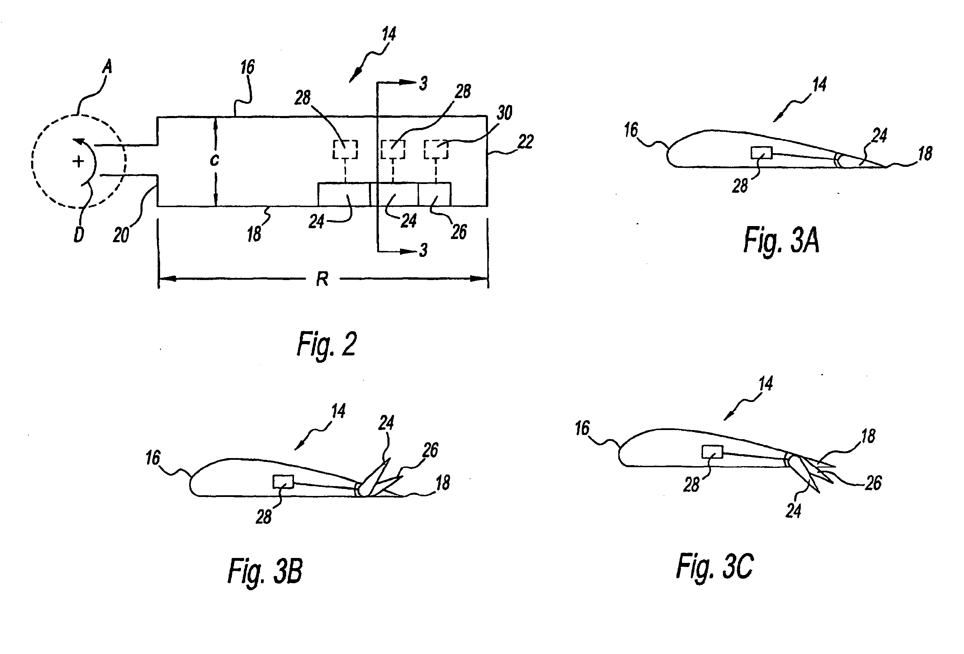

The operation of control system 10 is described with reference to FIGS. 2 and 3. As shown, the rotor blade 14 has a leading edge 16, a trailing edge 18, a root end 20, and a tip 22. The leading edge 16 is the forward-facing edge of the rotor blade 14 as the rotor blade rotates through azimuth A in direction of rotation D, while the trailing edge 18 is the rear-facing edge of the rotor blade 14 as the rotor blade rotates through azimuth A. The rotor blade 14 also has a chord length c, which is defined as the distance between the leading edge 16 and the trailing edge 18 as shown in FIG. 2. The rotor blade 14 also has a span R, which is defined as the distance between the root end 20 and the tip 22.

Each rotor blade 14 has one or more primary flaps 24 (only two shown) operatively connected to the rotor blade 14 so that the primary flaps 24 rotate about an axis parallel to the span R. Preferably, the primary flaps 24 are pivotally connected to the rotor blade 14. When the control system 10 includes more than one primary flap 24, each primary flap is preferably selectively and independently rotated. In addition, the control system 10 preferably can selectively and independently rotate the primary flap or flaps 24 on different rotor blades 14.

Each primary flap 24 can be rotated from a neutral position to either a positive position or a negative position. As used herein, the neutral position is defined as a position where the trailing-edge of the flap is substantially parallel to the trailing edge 18 of the rotor blade (FIG. 3A), the positive position is defined as a position where the trailing edge of the flap is above the trailing edge 18 of the rotor blade (FIG. 3B), and the negative position is defined as a position where the trailing edge of the flap is below the trailing edge 18 of the rotor blade (FIG. 3C).

Each primary flap 24 is operatively connected to a primary actuator 28 that interfaces with and controls the movement of the primary flap 24. The primary actuator 28 can be any actuator known in the art having the sufficient power density and bandwidth to move the trailing edge flaps 24 as necessary. Preferably, the actuator is an electromechanical actuator. More preferably, the actuator is a brushless direct current motor (BLDC motor) based actuator as described in US 20080101931 A1 In addition, each primary actuator 28 has sufficient stroke to move the primary flap 24 to positive and negative positions that are sufficient to provide primary flight control to the rotorcraft. Thus, the control system 10 can use the primary flaps 24 for primary flight control (PFC) of the rotorcraft.

Each rotor blade 14 also has one or more secondary flaps 26 (only one shown) operatively connected to the rotor blade so that the secondary flap can be rotated about an axis parallel to the span R. Preferably, the secondary flaps 24 are pivotally connected to the rotor blade. When the control system 10 includes more than one secondary flap 26, each secondary flap is preferably selectively and independently rotated. In addition, the control system 10 preferably can selectively and independently rotate the secondary flap or flaps 26 on different rotor blades 14. The secondary flap 26 can also be rotated from the neutral position to either the positive or the negative position.

The secondary flap 26 is operatively connected to a secondary actuator 30 that interfaces with and controls the movement of the secondary flap. Preferably, the secondary actuator 30 is an electromechanical actuator with high power density and bandwidth. More preferably, the secondary actuator 30 is a BLDC motor based actuator as described in US 20080101931 A1. In addition, the secondary actuator 30 has sufficient stroke to move the secondary flap 26 to positive and negative positions that are sufficient to provide at least higher harmonic control to the rotorcraft. Thus, the control system 10 can use the secondary flaps 26 to reduce noise and vibration of the rotorcraft, more specifically, for higher harmonic control (HHC).

In accordance with the principles of the present invention, the inventors have determined that it is advantageous to divide the tasks of primary flight control and higher harmonic control between two sets of flaps on each rotor blade 14. That is, for example, the control system 10 can use primary flaps 24 exclusively for PFC and secondary flaps 26 for HHC. Thus, the control system 10 provides, on each rotor blade, one set of flaps (primary flaps 24) dedicated to PFC and another set of flaps (secondary flaps 26) dedicated to HHC.

Use of control system 10, having the PFC function and the HHC function divided between flaps 24 and 26, allows for the optimum use of actuators 28 and 30 for each particular task. For example, the present disclosure has determined that the requirements for PFC and HHC in terms of force, stroke, and frequency are very different, making it beneficial to have dedicated actuators for each of these functions. Thus, control system 10 includes primary actuator 28 that preferably has a low frequency and high stroke, whereas secondary actuator 30 preferably has a higher frequency and a much lower stroke.

For example, generally the frequency needed for PFC is once per revolution, while the frequency needed for HHC is in the range of 2-5 per revolution. Frequency is defined as the number of cycles per revolution of rotor blade 14. A cycle is defined as the movement of primary flap 24 or secondary flap 26 from one extreme position to the other and back again. For example, one cycle for primary flap 24 could be moving from the maximum negative position to the maximum positive position, then returning to the maximum negative position. Stroke is defined as the distance between the maximum positive position and the maximum negative position. The stroke requirements between PFC and HHC actuators may vary by an order of magnitude. Because the stroke and frequency requirements for PFC and HHC are so different, each of the primary actuators 28 of the control system 10 preferably independently control each of the primary flaps 24, while each of the secondary actuators 30 preferably independently controls each of the secondary flaps 26.

The primary actuator 28 is designed to optimally meet the specific requirements for PFC while the secondary actuator 30 is designed to optimally meet the specific requirements for HHC. It should be noted that although the force and stroke required for HHC are much less than the force and stroke required for PFC, the frequency requirements are much higher. As a result, the secondary actuator 30 does not necessarily have a lower power requirement than the primary actuator 28.

Although optimized for HHC, the secondary actuator 30 and the secondary flap 26 are also preferably capable of being used for PFC under certain flight conditions. That is, demands on the primary actuators 28 are higher during some flight conditions, such as, but not limited to, maximum maneuvering flight conditions. During such flight conditions, the control system 10 preferably can utilize the secondary actuator 30 and the secondary flap 26 to supplement and/or enhance PFC. Thus, the control system 10 can use the secondary actuator 30 to move the secondary flap 26, which is normally dedicated to HHC, to support and/or enhance the PFC demands. Moreover, preferably, the control system 10 can also use the secondary actuator 30 to move the secondary flap 26 in the event of a failure of one or more primary flaps 24 and/or primary actuators 28.

When the control system 10 uses secondary actuator 30 and the secondary flap 26 for PFC, it may be beneficial to move the secondary flap in a non-harmonic manner, that is, in a manner that cannot be defined nor achieved by the standard HHC frequency range of 2 to 5 per revolution. For example, to achieve lift enhancement on the retreating side of rotor assembly 12, the secondary flap 26 may require deployment over a specified azimuth range. In such a case, the movement of secondary flap 26 effectuated by secondary actuator 30 may not be readily represented through harmonics of 2-5 per revolution.

Advantageously, the control system 10 does not require that a single flap 24 or 26 control both PFC and HHC simultaneously. Rather, the control system 10 only controls the secondary flaps 26 and the secondary actuators 30 for PFC under the certain predetermined operating conditions. Although the control system 10 can use the secondary actuator 30 for PFC under some flight conditions, the secondary actuator is optimized for HHC. As a result, the overall power and torque requirements of the secondary actuator 30 are lowered as compared to the primary actuator 28, thus reducing the design and production costs of the rotorcraft. The control system 10 uses the primary actuator 28 and the primary flap 24 exclusively for PFC, and so the primary actuator and flap are not exposed to the intense operation loads required for HHC. The reduced operation loads on the primary actuator 28 and the primary flap 24 reduces maintenance costs and increases the effective service life of the control system 10.

The control system 10 can control the movement of the primary and the secondary actuators 28, 30, respectively, in any known manner. For example, the control system 10 can control the movement of the primary actuators 28 in conjunction with inputs from a pilot or from an automated primary flight control system. Similarly, the control system 10 can control the movement of the secondary actuators 30 in conjunction with inputs from a pilot or from an automated higher harmonic control system.

In the preferred embodiment shown in FIG. 2, rotor blade 14 is shown with two primary flaps 24, and one secondary flap 26. Alternatively, the rotor blade 14 may have any number of primary flaps and secondary flaps, although generally the number of primary flaps will be greater than the number of secondary flaps. For example, in an alternate embodiment, the control system 10 has three primary flaps 24 and two secondary flaps 26.

FIG. 2 also shows the primary flaps 24 in the inboard position relative to the secondary flaps 26. As used herein, the inboard position is a position on along span R that is closer to the root end 20 than the tip 22. Alternatively, the present disclosure contemplates any combination of spanwise locution of primary flaps 24 and secondary flaps 26. For example, the inboard flaps may be dedicated primarily to HHC, with the outboard flaps dedicated primarily to PFC.

Each individual primary flap 24 and secondary flap 26 may vary in size; the length and width of each flap may be different. The length is defined as a percentage of the chord length c of the rotor blade 14; the width is defined as a percentage of the span R of the rotor blade 14.

The width of the primary flaps 24, when added together preferably covers approximately 15% to approximately 35% of span R of the rotor blade 14. More preferably, the primary flaps 24 are approximately 20% to 25% of the span R of the rotor blade 14. The width of the secondary flaps 26, when added together preferably covers approximately 5% to approximately 15% of the span R of the rotor blade 14. More preferably, the secondary flaps 26 cover approximately 10% of the span R of the rotor blade 14. The total width of both the primary flaps 24 and the secondary flaps 26 should preferably cover approximately 25% to approximately 50% of the span R of the rotor blade 14. More preferably, the total width of both the primary flaps 24 and the secondary flaps is approximately 25% to approximately 40% of the span R of the rotor blade 14.

The length of both the primary flaps 24 and the secondary flaps 26 preferably covers approximately 15% to 25% of the total chord length c of the rotor blade 14. Preferably, the length of primary flaps 24 and secondary flaps 26 is approximately 20% of the total chord length c of rotor blade 14.

A method for operating the above-described rotorcraft system, as illustrated in FIGS. 1 through 3, will now be described. The rotor assembly 12 has two or more rotor blades 14 (four shown) rotating in direction D. As the rotor blades 14 rotate through an azimuth A, the primary flaps 24 are pivoted by primary actuators 28 so as to be positioned in either the neutral, positive, or negative positions, as necessary to control the flight path of the rotorcraft.

Simultaneously during the rotation of the rotor blade 14 through azimuth A, the secondary flap 26 is pivoted by a secondary actuator 30 so as to be positioned in either the neutral, positive, or negative positions, as necessary to reduce the noise and/or vibrations produced by the rotorcraft.

The terms "first", "second", "primary", "secondary", and the like may be used herein to modify various elements. These modifiers do not imply a spatial, sequential, or hierarchical order to the modified elements unless specifically stated.

While the present invention has been described with reference to one or more exemplary embodiments, it will be understood by those skilled in the art that various changes may be made and equivalents may be substituted for elements thereof without departing from the scope of the present invention. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A rotorcraft control system (10) comprising:
at least one rotor blade (14) including a trailing edge (18), a chord length (c), and a span (R);
at least one primary flap (24) having a length and a width, the at least one primary flap (24) being operatively connected adjacent to the trailing edge (18) for movement among a neutral position, a positive position, and a negative position, the at least one primary flap (24) being used principally for primary flight control;
at least one primary actuator (28) operatively connected to the at least one primary flap (24) to move the at least one primary flap (24) among the neutral, positive, and negative positions, the at least one primary actuator (28) comprises a first stroke capability;
at least one secondary flap (26) having a length and a width, the at least one secondary flap (26) being operatively connected adjacent to the trailing edge (18) for movement among the neutral, positive, and negative positions, the at least one secondary flap (26) being used principally for higher harmonic control; and
at least one secondary actuator (30) operatively connected to the at least one secondary flap (26) to move the at least one secondary flap (26) among the neutral, positive, and negative positions, the at least one secondary actuator (30) comprises a second stroke capability, the second stroke capability less than said first stroke capability, with the stroke requirements between the at least one first actuator and the at least one secondary actuator varying by an order of magnitude.

2. The system (10) of claim 1, wherein the rotor blade (14) comprises at least two primary flaps (24) and at least one secondary flap (26).

3. The system (10) of claim 2, wherein the width of the at least two primary flaps (24) and the secondary flap (26), when added together, is 20% to 50% of the span (R).

4. The system (10) of claim 1, wherein the at least one primary flap (24) and the at least one primary actuator (28) are located in-board of the at least one secondary flap (26) and the at least one secondary actuator (30).

5. A method for effectuating primary flight control and higher harmonic control of a rotorcraft having a rotor assembly (12) including at least one rotor blade (14), the method comprising:
rotating the at least one rotor blade (14) through an azimuth;
moving at least one primary flap (24) within a first stroke capability having a neutral position, a positive position, and a negative position to carry out the primary flight control, the at least one primary flap (24) being operatively connected adjacent to a trailing edge (18) of the at least one rotor blade (14);
moving at least one secondary flap (26) within a second stroke capability less than the first stroke capability, the second stroke capability having a neutral position, a positive position, and a negative position to carry out the higher harmonic control, the at least one secondary flap (26) being operatively connected adjacent to the trailing edge (18) of the at least one rotor blade,
wherein the first and second stroke capabilities vary by an order of magnitude.

6. The method of claim 5, further comprising moving the at least one secondary flap (26) among the neutral position, the positive position, and the negative position to carry out the primary flight control.

7. The method of claim 6, further comprising moving the at least one secondary flap (26) among the neutral position, the positive position, and the negative position in a harmonic manner.

8. The method of claim 7, further comprising moving the at least one secondary flap (26) among the neutral position, the positive position, and the negative position in a non-harmonic manner.

9. The system (10) of claim 1, wherein the at least one primary actuator (28) comprises a first frequency capability and the at least one secondary actuator (30) comprises a second frequency capacity, the second frequency capacity greater than the first frequency capacity.

10. The system (10) of claim 1, wherein the at least one primary actuator (28) comprises a first force capability and the at least one secondary actuator (30) comprise a second force capability, said second force capability less than said first force capability.

## Patentansprüche

1. Drehflügler-Steuersystem (10), aufweisend:
mindestens ein Rotorblatt (14) mit einem hinteren Rand (18), einer Profilsehnenlänge (c) und einer Spannweite (R);
mindestens eine Primärklappe (24) mit einer Länge und einer Breite, wobei die mindestens eine Primärklappe (24) dem hinteren Rand (18) benachbart betriebsmäßig verbunden ist zur Bewegung zwischen einer neutralen Position, einer positiven Position und einer negativen Position, wobei die mindestens eine Primärklappe (24) hauptsächlich für die primäre Flugsteuerung verwendet wird;
mindestens einen Primäraktuator (28), der mit der mindestens einen Primärklappe (24) betriebsmäßig verbunden ist, um die mindestens eine Primärklappe (24) zwischen der neutralen, der positiven und der negativen Position zu bewegen, wobei der mindestens eine Primäraktuator (28) ein erstes Hubbewegungspotenzial aufweist;
mindestens eine Sekundärklappe (26) mit einer Länge und einer Breite, wobei die mindestens eine Sekundärklappe (26) dem hinteren Rand (18) benachbart betriebsmäßig verbunden ist zur Bewegung zwischen der neutralen, der positiven und der negativen Position, wobei die mindestens eine Sekundärklappe (26) hauptsächlich zur Steuerung im Bereich von höheren Harmonischen verwendet wird; und
mindestens einen Sekundäraktuator (30), der mit der mindestens einen Sekundärklappe (26) betriebsmäßig verbunden ist, um die mindestens eine Sekundärklappe (26) zwischen der neutralen, der positiven und der negativen Position zu bewegen, wobei der mindestens eine Sekundäraktuator (30) ein zweites Hubbewegungspotenzial aufweist, wobei das zweite Hubbewegungspotenzial kleiner ist als das erste Hubbewegungspotenzial ist und wobei die Hubbewegungserfordernisse zwischen dem mindestens einen Primäraktuator und dem mindestens einen Sekundäraktuator um eine Größenordnung variieren.

2. System (10) nach Anspruch 1,
wobei das Rotorblatt mindestens zwei Primärklappen (24) und mindestens eine Sekundärklappe (26) aufweist.

3. System (10) nach Anspruch 2,
wobei die Breite der mindestens zwei Primärklappen (24) und der Sekundärklappe (26) zusammengenommen 20% bis 50% der Spannweite beträgt.

4. System (10) nach Anspruch 1,
wobei die mindestens eine Primärklappe (24) und der mindestens eine Primäraktuator (28) innenseitig von der mindestens einen Sekundärklappe (26) und dem mindestens einen Sekundäraktuator angeordnet sind.

5. Verfahren zum Bewerkstelligen einer primären Flugsteuerung und einer Steuerung im Bereich von höheren Harmonischen eines Drehflügelers, das eine Rotoranordnung (12) mit mindestens einem Rotorblatt (14) aufweist, wobei das Verfahren folgende Schritte aufweist:
rotationsmäßiges Bewegen des mindestens einen Rotorblatts (14) durch einen Azimut;
Bewegen mindestens einer Primärklappe (24) innerhalb eines ersten Hubbewegungspotenzials, das eine neutrale Position, eine positive Position und eine negative Position beinhaltet, zum Ausführen der primären Flugsteuerung, wobei die mindestens eine Primärklappe (24) benachbart einem hinteren Rand des mindestens einen Rotorblatts (14) betriebsmäßig verbunden ist;
Bewegen mindestens einer Sekundärklappe (26) innerhalb eines zweiten Hubbewegungspotenzials, wobei das zweite Hubbewegungspotenzial eine neutrale Position, eine positive Position und eine negative Position beinhaltet, zum Ausführen der Steuerung im Bereich der höheren Harmonischen, wobei die mindestens eine Sekundärklappe (26) benachbart dem hinteren Rand (18) des mindestens einen Rotorblatts (14) betriebsmäßig verbunden ist,
wobei das erste und das zweite Hubbewegungspotenzial um eine Größenordnung variieren.

6. Verfahren nach Anspruch 5,
weiterhin aufweisend das Bewegen der mindestens einen Sekundärklappe (26) zwischen der neutralen Position, der positiven Position und der negativen Position zum Ausführen der primären Flugsteuerung.

7. Verfahren nach Anspruch 6,
weiterhin aufweisend das Bewegen der mindestens einen Sekundärklappe (26) zwischen der neutralen Position, der positiven Position und der negativen Position in harmonischer Weise.

8. Verfahren nach Anspruch 7,
weiterhin aufweisend das Bewegen der mindestens einen Sekundärklappe (26) zwischen der neutralen Position, der positiven Position und der negativen Position in einer nicht-harmonischen Weise.

9. System (10) nach Anspruch 1,
wobei der mindestens eine Primäraktuator (28) eine erste Frequenz-Fähigkeit aufweist und der mindestens eine Sekundäraktuator (30) eine zweite Frequenz-Fähigkeit aufweist, wobei die zweite Frequenz-Fähigkeit größer ist als die erste Frequenz-Fähigkeit.

10. System (10) nach Anspruch 1,
wobei der mindestens eine Primäraktuator (28) eine erste Kraft-Fähigkeit aufweist und der mindestens eine Sekundäraktuator (30) eine zweite Kraft-Fähigkeit aufweist, wobei die zweite Kraft-Fähigkeit kleiner ist als die erste Kraft-Fähigkeit.

## Revendications

1. Système de commande de giravion (10), comprenant :
au moins une pale (14) comprenant un bord de fuite (18), une longueur de corde (c), et une envergure (R) ;
au moins un volet primaire (24) possédant une longueur et une largeur, l'au moins un volet primaire (24) étant fonctionnellement raccordé de façon adjacente au bord de fuite (18) pour un mouvement parmi une position neutre, une position positive, et une position négative, l'au moins un volet primaire (24) étant utilisé principalement pour la commande de vol primaire ;
au moins un actionneur primaire (28) fonctionnellement raccordé à l'au moins un volet primaire (24) pour déplacer l'au moins un volet primaire (24) parmi les positions neutre, positive et négative, l'au moins un actionneur primaire (28) comprend une première capacité de course ;
au moins un volet secondaire (26) possédant une longueur et une largeur, l'au moins un volet secondaire (26) étant fonctionnellement raccordé de façon adjacente au bord de fuite (18) pour un mouvement parmi les positions neutre, positive et négative, l'au moins un volet secondaire (26) étant utilisé principalement pour la commande à harmonique plus élevée ; et
au moins un actionneur secondaire (30) fonctionnellement raccordé à l'au moins un volet secondaire (26) pour déplacer l'au moins un volet secondaire (26) parmi les positions neutre, positive et négative, l'au moins un actionneur secondaire (30) comprend une seconde capacité de course, la seconde capacité de course étant inférieure à ladite première capacité de course, les nécessités de course entre l'au moins un premier actionneur et l'au moins un actionneur secondaire variant selon un ordre d'amplitude.

2. Système (10) selon la revendication 1, dans lequel la pale (14) comprend au moins deux volets primaires (24) et au moins un volet secondaire (26).

3. Système (10) selon la revendication 2, dans lequel la largeur des au moins deux volets primaires (24) et du volet secondaire (26), lorsqu'ils sont ajoutés les uns aux autres, correspond à 20 % à 50 % de l'envergure (R).

4. Système (10) selon la revendication 1, dans lequel l'au moins un volet primaire (24) et l'au moins un actionneur primaire (28) sont situés à l'intérieur de l'au moins un volet secondaire (26) et de l'au moins un actionneur secondaire (30).

5. Procédé pour effectuer une commande de vol primaire et une commande à harmonique plus élevée d'un giravion possédant un ensemble rotor (12) comprenant au moins une pale (14), le procédé comprenant :
la rotation de l'au moins une pale (14) à travers un azimut ;
le déplacement d'au moins un volet primaire (24) au sein d'une première capacité de course possédant une position neutre, une position positive, et une position négative pour réaliser la commande de vol primaire, l'au moins un volet primaire (24) étant fonctionnellement raccordé de façon adjacente à un bord de fuite (18) de l'au moins une pale (14) ;
le déplacement d'au moins un volet secondaire (26) au sein d'une seconde capacité de course inférieure à la première capacité de course, la seconde capacité de course possédant une position neutre, une position positive, et une position négative pour réaliser la commande harmonique plus élevée, l'au moins un volet secondaire (26) étant fonctionnellement raccordé de façon adjacente au bord de fuite (18) de l'au moins une pale,
dans lequel les première et seconde capacités de course varient selon un ordre d'amplitude.

6. Procédé selon la revendication 5, comprenant en outre le déplacement de l'au moins un volet secondaire (26) parmi la position neutre, la position positive, et la position négative pour réaliser la commande de vol primaire.

7. Procédé selon la revendication 6, comprenant en outre le déplacement de l'au moins un volet secondaire (26) parmi la position neutre, la position positive, et la position négative de manière harmonique.

8. Procédé selon la revendication 7, comprenant en outre le déplacement de l'au moins un volet secondaire (26) parmi la position neutre, la position positive, et la position négative de manière non harmonique.

9. Système (10) selon la revendication 1, dans lequel l'au moins un actionneur primaire (28) comprend une première capacité de fréquence et l'au moins un actionneur secondaire (30) comprend une seconde capacité de fréquence, la seconde capacité de fréquence étant supérieure à la première capacité de fréquence.

10. Système (10) selon la revendication 1, dans lequel l'au moins un actionneur primaire (28) comprend une première capacité de force et l'au moins un actionneur secondaire (30) comprend une seconde capacité de force, ladite seconde capacité de force étant inférieure à ladite première capacité de force.
